# EUROPEAN PATENT APPLICATION

(11) **EP 3 461 572 A1**
(43) Date of publication of application: **03.04.2019**
(21) Application number: 17194364.0
(22) Date of filing: 02.10.2017
(51) Int. Cl.: B22F 3/105, B33Y 10/00, B33Y 30/00, B29C 64/20

(54) **BUILD PLATE FOR ADDITIVE MANUFACTURING AND METHOD**

(71) Applicant: Siemens Aktiengesellschaft, 80333 München (DE)
(72) Inventor: RULE, David, 10115 Berlin (DE); WIETSTOCK, Sebastian, 10315 Berlin (DE); WITTE, Fabio, 13347 Berlin (DE); LENZEN, Thomas, 52062 Aachen (DE)

(57) **Abstract**

A build plate (10) for the additive manufacture of a structure (100) being configured to support the structure (100) during a buildup of the structure (100) and a post-buildup manufacturing step, wherein a material (10') of the build plate (10) is chosen and adapted to the manufacture in that it has a melting temperature above a stress-relief temperature required for stress-relief of the as-built structure (100) and below a melting temperature of the as-built structure (100).

## Description

The present invention relates to a build plate or base plate for the additive manufacture of the structure or component. Further, the present invention relates to a method of additively manufacturing the structure or a method of separating the structure from the build plate.

Preferably, the component denotes a component applied in a turbo machine, e.g. in the flow path hardware of a gas turbine. The component is thus preferably made of a superalloy or nickel-based alloy, particularly a precipitation hardened alloy.

Additive manufacturing techniques comprise e.g. powder bed methods, such as selective laser melting (SLM), selective laser sintering (SLS) or electron beam melting (EBM).

A method of selective laser melting is described in EP 2 601 006 B1, for example.

Additive manufacturing methods have proven to be useful and advantageous in the fabrication of prototypes or complex and filigree components, such as lightweight design or cooling components comprising mazelike internal structures. Further, additive manufacture stands out for its short chain of process steps, as a manufacturing step can be carried out directly based on corresponding CAD/CAM and/or construction data.

Powder bed manufacturing methods such as selective laser melting are relatively well known methods for fabricating, prototyping or manufacturing structures or components from powder material, for instance. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a wiper that moves, e.g. automatically, over the powder bed and removes excess material. Typical layer thicknesses amount to 20 µm or 40 µm. During the manufacture, said laser beam scans over the surface and melts the powder on selected areas which may be predetermined by a CAD-file according to the geometry of the component to be manufactured.

In the selective laser melting process, components are buildup or printed onto the substrate plate or build plate, wherein the plate serves for mechanical stability of the part during the buildup and any post buildup steps. Particularly, the build plate must constrain the component until the residual stress created during the printing process is removed during a later heat treatment. Inherently, the structure is usually adhesively bonded to the build plate, and must be removed later on. Additional material and time is needed to complete the component via mechanical cutting, such as wire EDM (electrical discharge machining). Further, the plate is usually highly strained and particularly warped during the process and must be scrapped or reworked.

Usually, an additional sacrificial region of e.g. 3 to 5 mm in thickness is provided e.g. by additive buildup under the component. This extra material is then used as play to remove the component / structure from the plate. Later on, as mentioned, the plate has to be reworked mechanically to maintain dimensional accuracy and rigidity for another additive manufacturing process.

It is an object of the present invention to provide means which allow for an easy removal of the build plate from an additively build structure on top thereof, wherein the build plate can at the same time serve for the purpose of mechanical stabilization of the component.

The mentioned object is achieved by the subject-matters of the independent claims. Advantageous embodiments and refinements are subject-matter of the dependent claims.

An aspect of the present invention relates to a build plate for the additive manufacture of the structure, the build plate being configured to support the structure or component during a buildup of the same and during a post-buildup step, such as heating or heat treatment step, wherein the material of the build plate is chosen and adapted to the manufacture, wherein it has a melting temperature, (defined at standard pressure conditions), above a (stress-) relief temperature which is required for stress-relief of the as-built structure and below a melting temperature of the as-built structure.

The term "adapted" as used previously shall particularly mean that the material is preferably tailored to the particulars of the additive manufacture as a whole, i.e. the actual buildup of the structure and any post-buildup steps, such as thermal relief or stress relaxation treatment.

As an advantage, a smart route is provided for powder bed based additive processes, with which the required build plate can easily be removed from the components to be manufactured on it, wherein the component is nevertheless reliably mechanically stabilized and supported during the buildup as well as during a later (stress or strain relieving) thermal treatment. Although the presented solution may not be straightforward for any material which is weldable or additively manufacturable, the presented means comprising the adaption of the material of the build plate to the utilized additive process allows solving a major problem of state-of-the-art additive processes.

The term "as built" shall particularly mean, that the additive buildup is preferably completed, wherein the additively built structure has however not yet been thermally treated and, thus, still comprises a significant amount of mechanical stress which has to be relieved or compensated prior to the separation of the connected build plate.

In an embodiment, the material of the build plate is configured such that it mechanically stabilizes the structure during the buildup.

In an embodiment, the material of the build plate is configured such that it mechanically stabilizes the structure during post-buildup processes or manufacturing steps, such as a heat treatment.

A further aspect of the present invention relates to an apparatus for the additive manufacture of the structure, comprising the build plate. The apparatus further comprises a grate and a mold, wherein the grate and the mold are coupled, i.e. arranged and configured, to the build plate such that the material of the build plate - once heated above its melting temperature after the manufacture of the structure - melts and is collected in the mold. Consequently, the material can be collected, prepared, and recycled for a subsequent component manufactures or build jobs.

A further aspect of the present invention relates to a method of additively manufacturing a structure comprising additively building up the structure on a build plate, wherein the build plate mechanically stabilizes the structure.

The method further comprises thermal treatment of the built structure on the build plate at a melting temperature of the material of the build plate, wherein the material melts and the melting effect a separation of the structure from the build plate. Said melting and/or separation may be performed in a second thermal cycle as part of the mentioned thermal treatment.

In an embodiment the method comprises collecting the molten material of the build plate in the mold.

In an embodiment, the method comprises - after the additive buildup - thermal treatment of the structure at a relief temperature, such as a stress or strain relief temperature, of the structure. Said stress-relief may be performed in a first thermal cycle as part of the mentioned thermal treatment.

In an embodiment, the melting temperature of the material is greater than the relief temperature.

In an embodiment, the method comprises recycling of the (molten) material for a further additive manufacturing process, as described.

In an embodiment, the mentioned thermal treatment for relief and the separation are carried out in the same or a continuous thermal treatment process, e.g. without intermediate (active) cooling step. The thermal treatment may effect stress or strain relief in the as-built structure and the separation by melting of the material of the build plate.

In an embodiment, the thermal treatment process comprises at least one temperature ramp.

Advantages relating to the described build plate and/or the described apparatus may as well pertain to the method, and vice versa.

Further features, expediencies and advantageous refinements become apparent from the following description of the exemplary embodiment in connection with the Figures.
Figure 1 shows a schematic perspective view of the component manufactured on top of a build plate according to the present invention.
Figure 2 shows a schematic perspective view of the as-built component during or prior to a post-buildup manufacturing step.
Figure 3 shows a simplified schematic flow chart, indicating method steps according to the present invention.

Like elements, elements of the same kind and identically acting elements may be provided with the same reference numerals in the Figures.

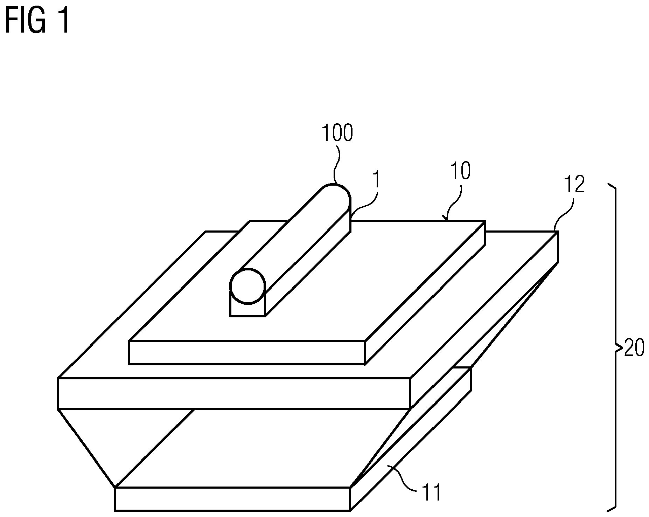

Figure 1 shows an apparatus 20. The apparatus 20 is preferably applied in an additive manufacturing device (not explicitly indicated) for the manufacture of a component 100, for example.

The apparatus 20 comprises a build plate 10. The build plate 10 is preferably configured, tailored or specifically adapted for the additive manufacture of a structure 100 for the component or its material. Further, the structure is preferably built on top of the build plate 10, preferably by selective laser melting, electron beam melting or any other powder bed based additive manufacturing method.

The build plate 10 is, preferably, further configured to support or mechanically stabilizes the structure 100 during its buildup and any possible or necessary post-buildup manufacturing steps, such as heating or annealing.

The structure 100 may - by way of its additive buildup - be directly (metallurgically) connected to the build plate 10.

Alternatively, a structure 100 may be indirectly (metallurgically) connected to the build plate 10, e.g. via a (further) support structure 1, which may e.g. allow for supporting the overhanging regions of the component 100. It has to be understood, however, that the support structure 1 is optional and/or only necessary in the additive manufacture of complicated geometries. Accordingly, the structure 100 may comprise said support structure 1.

The build plate 10 is made of a material 10'.

The material 10' of the build plate 10 has preferably a melting temperature (at standard pressure conditions) above a stress or strain relief temperature required for stress relief of the as-built structure 100 and below a melting temperature of the structure 100.

The apparatus 20 further comprises a mold 11.

The apparatus 20 further comprises a grate 12. The grate 12 is, preferably, directly arranged under the build plate 10 during its intended operation. The mold 11 is, preferably, further directly arranged or arrangeable below the grate 12, such that, the (molten) material of the build plate 10 can - once heated above its melting point - pass the grate 12 from above and be collected in the mold 11.

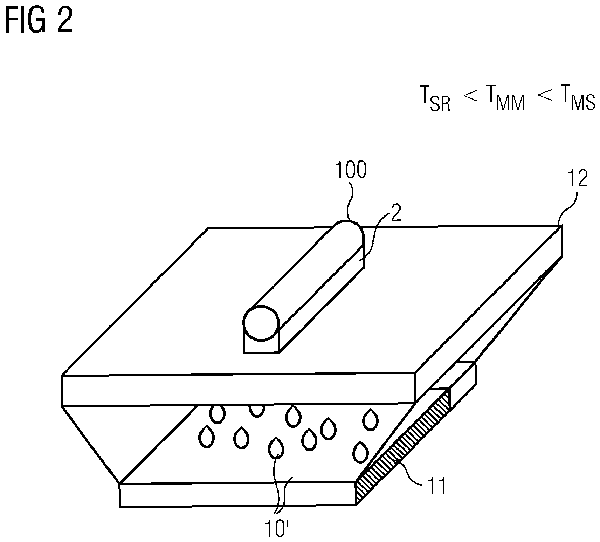

Figure 2 shows in a view similar to that of Figure 1, a situation at an elevated temperature, preferably at a temperature T_{MM} defining the melting point of the material of the build plate 10 (cf. also Figure 1).

Further said temperature T_{MM} lies, preferably, above a stress-relief temperature T_{SR} of the structure 100 and below a melting temperature T_{MS} of said structure 100. This effects melting of the material of the build plate 10 as compared to Figure 1. Consequently, the material 10' melts and drips through openings (not explicitly indicated) of the grate 12. The mould 11, being located directly underneath the grate 12, can, thus, be used to collect the molten material 10' as indicated in Figure 2, e.g. for recycling purposes.

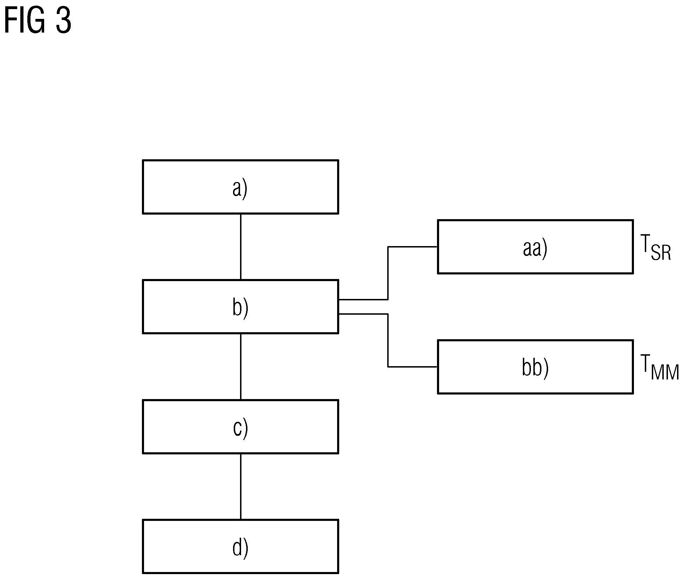

Figure 3 summarizes method steps of the present invention. It particularly indicates the method of additively manufacturing the structure 100 or component comprising, a), additively building up the structure 100 on the build plate 10, wherein the build plate 10 mechanically stabilizes or supports the structure 100 during the generation or buildup of the structure 100.

The method may further comprise - after the additive buildup or generation of the structure 100 - a thermal cycle aa) of said structure 100 at the relief temperature T_{SR} of the structure 100. Said thermal treatment may be a first thermal cycle.

The method further comprises, b), a thermal treatment of the as-built structure 100 on the build plate 10 at the melting temperature T_{MM} of a material 10' which effects that the material 10' melts (cf. numeral bb) in Figure 3). The thermal treatment effects that, as indicated in Figure 2, the material 10' melts and passes through the grate 12 and can, thus, be collected in the mold 11.

Said thermal treatment, preferably, comprises the first thermal cycle as mentioned above.

The thermal treatment further effects - via the melting of the material 10' - a separation of the structure 100 from the build plate 10.

At least, the structure 100 being still bonded to the support structure 1 are separated from the build plate 10, wherein, possibly, the support structure 1 has then still to be manually machined or separated from the desired structure.

The thermal treatment at the melting temperature T_{MM} of the material 10' can, thus, be perceived as comprising a second thermal cycle, following the first thermal cycle.

In other words, said thermal treatment (cf. numeral b)) may be a coherent temperature treatment comprising the first and the second thermal cycle (cf. aa), and bb)), e.g. as subcycles or thermal "ramps" (without active cooling in between). Preferably, the annealing or stress relieving treatment during the first thermal cycle and the (thermal) separation of the build plate 10 and the structure 100 are carried out in the same thermal treatment process. This overall thermal treatment process (b)) may comprise one or a plurality of temperature "ramps", which allow for the most expedient stress relieving and subsequently favorable separation of the build plate from the structure 100.

The method further comprises, c), collecting the molten material 10' of the build plate 10 in the mold 11.

The method may further comprise recycling (cf. method step d)) the material 10' for a further additive manufacturing process.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Build plate (10) for the additive manufacture of a structure (100), the build plate being configured to support the structure (100) during a buildup of the structure (100) and a post-buildup manufacturing step, wherein a material (10') of the build plate (10) is chosen and adapted to the manufacture, wherein it has a melting temperature above a stress-relief temperature required for stress-relief of the as-built structure (100) and below a melting temperature of the as-built structure (100).

2. Build plate (10) according to claim 1, wherein the material (10') of the build plate (10) is configured such that it mechanically stabilizes the structure (10) during the buildup and post-buildup processes, such as a heat treatment.

3. Apparatus (20) for the additive manufacture of a structure (100), comprising the build plate (10) according to claim 1 or 2, further comprising a grate (12) and a mold (11), wherein the grate (12) is coupled to the build plate (10) such that the material (10') of the build plate (10) - once heated above its melting temperature after the buildup of the structure (100) - is collected in the mold (11).

4. Method of additively manufacturing a structure comprising the steps of:
- a) additively building up the structure (100) on a build plate (10) according to one of the previous claims, wherein the build plate (10) mechanically stabilizes the structure (100),
- b) thermal treatment of the as-built structure (100) on the build plate (10) at a melting temperature of a material (10') of the build plate (10), wherein the material (10') melts and the melting effects a separation of the structure (100) from the build plate (10).

5. Method according to claim 4, comprising collecting (c)) the molten material (10') of the build plate (10) in a mold (11).

6. Method according to claim 4 or 5, comprising - after the additive buildup - thermal treatment (aa)) at a stress-relief temperature of the structure (100).

7. Method according to claim 5 or 6, wherein the melting temperature (T_{MM}) of the material (10') is greater than the stress-relief temperature (T_{SR}).

8. Method according to one of claims 4 to 7, comprising recycling (d)) the material (10') for a further additive manufacturing process.

9. Method according to one of claims 4 to 8, wherein the thermal treatment for stress-relief and the separation are carried out in the same thermal treatment process (b)).
